# EUROPÄISCHE PATENTANMELDUNG

(11) **EP 0 637 048 A1**
(43) Veröffentlichungstag der Anmeldung: **01.02.1995**
(21) Anmeldenummer: 94890123.6
(22) Anmeldetag: 22.07.1994
(51) Int. Cl.: H01J 9/00, B24C 3/32, B24C 11/00

(54) **Verfahren zum Entsorgen von Kathodenstrahl- oder Elektroluminiszenz-Röhren**

(30) Priorität: 23.07.1993 AT 1479/93
(71) Anmelder: Kopecky, Friedrich, A-1140 Wien (AT); Ritschka, Walter, Dipl.Ing., A-2372 Giesshübel (AT)
(72) Erfinder: Kopecky, Friedrich, A-1140 Wien (AT); Ritschka, Walter, Dipl.Ing., A-2372 Giesshübel (AT)
(74) Vertreter: Haffner, Thomas M., Dr.

(57) **Zusammenfassung**

Das Verfahren zur Entsorgung von Kathodenstrahl- oder Elektroluminiszenz-Röhren sieht vor, daß die Röhren geöffnet und zerkleinert werden, wofür ein Flüssigkeitsstrahlschneidverfahren verwendet wird. Die Trennung erfolgt längs vorgegebener Trennebenen, und Beschichtungen an der Innenseite der Röhren werden mit den gleichen Einrichtungen durch Umstellung der Strahlform auf weichen Strahl und/oder durch Verringerung eines Abrasivmittelzusatzes ausgewaschen.

## Beschreibung

Die Erfindung bezieht sich auf ein Verfahren zum Entsorgen von Kathodenstrahl- oder Elektroluminiszenz-Röhren, bei welchem die Röhren geöffnet und zerkleinert werden.

Für die Entsorgung von Monitorbildschirmen bzw. Fernsehbildröhren sind bisher eine Reihe von Verfahren bekannt geworden. Keines der bekannten Verfahren zeichnet sich durch besonders hohe Zuverlässigkeit aus, und es ist mit den bisher bekannt gewordenen Verfahren nicht ohne weiteres möglich, ohne aufwendige Umweltschutzmaßnahmen und zusätzliche Sicherheitseinrichtungen eine Entsorgung zu erzielen. Mit Rücksicht auf die rapide ansteigende Menge von zu entsorgenden Bildröhren ist ein Verfahren, bei welchem keine zusätzlichen Sicherheitsmaßnahmen erforderlich sind, und welches sich durch ein hohes Maß an Zuverlässigkeit und die Möglichkeit, sortenreine Rückstände bzw. einer Wiederaufbereitung zuführbare Substanzen zu gewinnen, auszeichnet, von besonderer Bedeutung.

Bei den bisher bekannten mechanischen Verfahren wurde mit Trennscheiben gearbeitet, wobei derartige Verfahren auf beliebige Bildröhren anwendbar sind. Durch Glasbruch, sowie durch Belastung der Luft durch Glasstaub, sind jedoch besondere Schutzeinrichtungen und insbesondere ein Schutz von Personen gegen Silikose erforderlich. Das Ausmaß der Umweltbelastung derartiger Verfahren ist relativ hoch. Im Ergebnis liegen mechanisch gebrochene bzw. zerkleinerte Bildröhrenbestandteile vor, welche teilweise mit Luminiszenzschichten oder dgl. kontaminiert sind und nur teilweise hinreichend reines Glas darstellen, welches unmittelbar einer Wiedereinschmelzung zugeführt werden könnte.

Es sind weiters thermische Verfahren bekannt geworden, welche allerdings nur bei modernen Bildröhren verwendbar sind. Moderne Bildröhren weisen eine Klebenaht zwischen dem Bildschirm und dem Bildschirmtubus auf, welche thermisch beispielsweise unter Verwendung eines Heizdrahtes gesprengt werden kann. Bei älteren Röhren, welche derartige Klebestellen nicht aufweisen, ist das Verfahren nicht ohne weiteres einsetzbar. Das Ausmaß an exakten Schnitten ist bei derartigen Verfahren relativ gering.

Es wurden schließlich auch naßchemisch-thermische Verfahren bereits entwickelt, bei welchen die Klebefuge bei zweigeteilten Bildröhren moderner Bauart angeätzt wird und durch Temperaturschock zum Reißen gebracht wird. Auch dieses Verfahren ist für ältere Bildröhren nicht ohne weiteres einsetzbar. Die Ätzung erfolgt unter Verwendung von Säure, wodurch eine teilweise Lösung von metallischen Bestandteilen im Inneren derartiger Röhren zu befürchten ist. Ein in der Regel teilweise bleihaltiger Schlamm in Verbindung mit Lösungssäure stellt ein weiteres Umweltproblem dar, und es entstehen hochgiftige Produkte, wenn beispielsweise Flußsäure mit Bestandteilen der Luminiszenzschicht reagiert. Das Verfahren ist insgesamt relativ aufwendig, wobei auch hier mit Rücksicht auf die hohe Umweltbelastung und die zusätzlich erforderlichen Sicherheitsvorkehrungen kein einfaches und betriebssicheres Verfahren vorliegt.

Die Erfindung zielt nun darauf ab, ein einfaches und betriebssicheres Verfahren für das Entsorgen von Kathodenstrahl- oder Elektroluminiszenz-Röhren der eingangs genannten Art vorzuschlagen, mit welchem es mit geringen Mitteln gelingt, Teile derartiger Kathodenstrahl- oder Elektroluminiszenz-Röhren zu isolieren, welche einer gesonderten und sortenreinen Aufarbeitung zugeführt werden können. Weiters zielt die Erfindung darauf ab, das Sicherheitsrisiko in unmittelbarer Nähe der Vorrichtung zur Durchführung des Verfahrens wesentlich herabzusetzen und ein hohes Maß an Zuverlässigkeit und Gefahrlosigkeit zu gewährleisten.

Zur Lösung dieser Aufgabe besteht das erfindungsgemäße Verfahren im wesentlichen darin, daß die Röhren durch Flüssigkeitsstrahl-, insbesondere Wasserstrahlschneiden, längs vorgegebener Trennebenen geöffnet werden. Dadurch, daß ein an sich bekanntes Flüssigkeitsstrahl-, insbesondere Wasserstrahlschneiden, Verwendung findet, kann auf toxische Säure verzichtet werden. Die Verwendung des Wasserstrahlschneidens erlaubt hiebei in einfacher Weise auch auf ein vorangehendes Anbohren zum Druckausgleich zu verzichten, da bei einem Wasserstrahlschneiden in der ersten Phase, nämlich dann, wenn die Röhre erstmalig geöffnet wird, bestenfalls ein kurzes Ansaugen von Flüssigkeit in das Innere der Röhre erfolgt, welches jedoch mit Rücksicht auf die geringe Aggressivität des Schneidmediums zu keiner nennenswerten Lösung toxischer Substanz führt. Dadurch, daß längs vorgegebener Trennebenen mit einem Flüssigkeitsstrahlschneiden in besonders einfacher Weise eine Öffnung erfolgen kann, gelingt es, den die Elektroden, insbesondere die Kathode, enthaltenden Teil der Röhre gesondert abzutrennen, worauf im Falle von Bildröhren ein erster konischer Teilbereich der Röhre verbleibt, in welchem üblicherweise keine Luminiszenzbeschichtung vorliegt. Dieser erste Teilbereich der Bildschirmröhre besteht somit aus hochreinem Glas, welches durch entsprechende Abtrennung von der Bildschirmfläche gesondert weiterverwendet werden kann. Dadurch, daß auch parallel zur Bildschirmfläche eine im wesentlich in einer Ebene liegende Trennung mit einem Wasserstrahlschneiden bzw. Flüssigkeitsstrahlschneiden vorgenommen werden kann, gelingt es, den eigentlichen Bildschirm gesondert abzutrennen, und einer gesonderten Aufbereitung zuzuführen. Für das Wasserstrahlschneiden, bei welchem ein gebündelter Wasserstrahl zum Einsatz gelangt, wird in der Regel ein Abrasivmittel eingesetzt, welches das Trennen erleichtert. Die Wahl des Abrasivmittels und die Wahl des flüssigen Mediums für das Flüssigkeitsstrahlschneiden kann auf die Wandstärke und den speziellen Typus der jeweils vorliegenden Röhre optimiert werden, wodurch ein hohes Maß an Betriebssicherheit sichergestellt wird.

Die Verwendung des Flüssigkeitsstrahlschneidens erlaubt aber nun in einfacher Weise auch ohne zusätzliche Aggregate eine Abtrennung von Innenbeschichtungen derartiger Röhren. In besonders vorteilhafter Weise wird daher das erfindungsgemäße Verfahren so weitergebildet, daß Beschichtungen an der Innenseite der Röhren, wie z. B. Luminiszenzschichten in Bildschirmen, durch Umstellung der Strahlform auf weichen Strahl und/oder durch Verringerung eines Abrasivmittelzusatzes ausgewaschen werden. Hier gelingt es, durch einfache Umstellung der Strahlform von einem Schneidbetrieb auf einen Abrasivbetrieb umzustellen, wobei je nach Art der Innenbeschichtung ein geeignetes Abrasivmittel zugesetzt werden kann, oder sogar überhaupt auf Abrasivmittel verzichtet werden kann. Die abgetrennte Innenbeschichtung kann gesondert entsorgt werden, wodurch die Umweltbelastung wesentlich verringert werden kann.

Eine besonders saubere Trennung erfolgt hier mit Vorteil dadurch, daß im Falle von Bildschirmen die Trennebenen im wesentlichen parallel zur Bildschirmebene gewählt werden, wobei eine derartige Wahl der Trennebene gleichzeitig sicherstellt, daß der Abrasivstrahl, welcher die Abtrennung des Tubus von der Bildschirmfläche sicherstellen soll, nicht unmittelbar auf die Innenbeschichtung auftrifft, wodurch eine Kontamination des Schneidmediums in dieser Phase vermieden wird. Das Verfahren wird hiebei in besonders vorteilhafter Weise so durchgeführt, daß die Trennebenen im wesentlichen normal auf die Öberfläche des Schneidmediums in einem Behälter für das flüssige Schneidmedium gewählt wird, wodurch gleichzeitig sichergestellt wird, daß keine nennenswerte kinetische Energie beim Auftreffen auf die Innenfläche des Bildschirmes einer Kathodenstrahlröhre mehr aufgebracht werden kann. Eine derartige Verfahrensweise verringert die Gefahr einer Kontamination des Flüssigkeitsstrahlmediums wesentlich.

Zum Abtrennen von Beschichtungen an der Innenseite von Röhren, wie z.B. Luminiszenzschichten, wird, wie bereits eingangs erwähnt, mit Vorteil so vorgegangen, daß auf einen weichen bzw. breiten Strahl umgestellt wird. Um die bei diesem Abtrennen unvermeidbare Kontamination des Strahlmediums so gering wie nur möglich zu halten, wird am einfachsten die Menge des Flüssigstrahlmediums so gering wie möglich gehalten, um die Entsorgung zu vereinfachen. Mit Vorteil wird daher gemäß dem erfindungsgemäßen Verfahren so vorgegangen, daß die Umstellung auf weichen bzw. breiten Strahl in einem Behälter mit einem gegenüber dem Behälter für den Schneidvorgang kleinerem Flüssigkeitsvolumen vorgenommen wird.

Die exakte Einhaltung der zuvor definierten Trennebenen zur Verringerung der Kontamination im Trennverfahren wird in einfacher Weise dadurch sichergestellt, daß die Röhren von einem Manipulator ergriffen und während des Schneidvorganges in Rotation um eine den Schneidstrahl schneidende oder kreuzende Achse versetzt werden. Ein derartiger Manipulator kann in besonders einfacher Weise über Saugvorrichtungen am Bildschirm angreifen, wobei insbesondere bei dem erfindungsgemäßen Flüssigkeitsstrahlschneiden der Manipulator in die Flüssigkeit eintauchen kann und einen besonders sicheren Halt durch Ansaugen an der Außenseite der Bildröhre vorfinden kann.

Sowohl für das Flüssigkeitsstrahl- bzw. das Wasserstrahlschneiden als auch für das Ablösen der Beschichtungen an der Innenseite der Röhren kann das Strahlmedium über längeren Zeitraum im internen Kreislauf geführt werden, wodurch die Umweltbelastung wesentlich verringert wird. In besonders vorteilhafter Weise wird das für den weichen bzw. breiten Strahl im Kreislauf geführte flüssige Strahlmedium gesondert, vorzugsweise nach einem Eindicken, entsorgt. Je nach abzulösender Beschichtung an der Innenseite der Röhren kann dem flüssigen Strahlmedium für den weichen bzw. für den breiten Strahl ein Lösungsmittel für organische Beschichtungen zugesetzt werden. Äußerstenfalls kann das flüssige Strahlmedium aus einem derartigen Lösungsmittel bestehen, und es kann daher exakt an die jeweiligen Bedürfnisse angepaßt mit hohem Maß an Betriebssicherheit gearbeitet werden.

## Patentansprüche

1. Verfahren zum Entsorgen von Kathodenstrahl- oder Elektroluminiszenz-Röhren, bei welchem die Röhren geöffnet und zerkleinert werden, dadurch gekennzeichnet, daß die Röhren durch Flüssigkeitsstrahl-, insbesondere Wasserstrahlschneiden, längs vorgegebener Trennebenen geöffnet werden.

2. Verfahren nach Anspruch 1, dadurch gekennzeichnet, daß Beschichtungen an der Innenseite der Röhren, wie z. B. Luminiszenzschichten in Bildschirmen, durch Umstellung der Strahlform auf weichen Strahl und/oder durch Verringerung eines Abrasivmittelzusatzes ausgewaschen werden.

3. Verfahren nach Anspruch 1 oder 2, dadurch gekennzeichnet, daß im Falle von Bildschirmen die Trennebenen im wesentlichen parallel zur Bildschirmebene gewählt werden.

4. Verfahren nach Anspruch 1, 2 oder 3, dadurch gekennzeichnet, daß die Trennebenen im wesentlichen normal auf die Öberfläche des Schneidmediums in einem Behälter für das flüssige Schneidmedium gewählt wird.

5. Verfahren nach einem der Ansprüche 1 bis 4, dadurch gekennzeichnet, daß die Umstellung auf weichen bzw. breiten Strahl in einem Behälter mit einem gegenüber dem Behälter für den Schneidvorgang kleinerem Flüssigkeitsvolumen vorgenommen wird.

6. Verfahren nach einem der Ansprüche 1 bis 5, dadurch gekennzeichnet, daß die Röhren von einem Manipulator ergriffen und während des Schneidvorganges in Rotation um eine den Schneidstrahl schneidende oder kreuzende Achse versetzt werden.

7. Verfahren nach Anspruch 6, dadurch gekennzeichnet, daß Bildröhren über Saugvorrichtungen am Bildschirm ergriffen werden.

8. Verfahren nach einem der Ansprüche 1 bis 7, dadurch gekennzeichnet, daß das für den weichen bzw. breiten Strahl im Kreislauf geführte flüssige Strahlmedium gesondert, vorzugsweise nach einem Eindicken, entsorgt wird.

9. Verfahren nach einem der Ansprüche 1 bis 8, dadurch gekennzeichnet, daß das flüssige Strahlmedium für den weichen bzw. breiten Strahl Lösungsmittel für organische Beschichtungen enthält.
